# EUROPEAN PATENT APPLICATION

(11) **EP 2 708 573 A1**
(43) Date of publication of application: **19.03.2014**
(21) Application number: 12782618.8
(22) Date of filing: 03.04.2012
(51) Int. Cl.: C08J 9/228, C08L 101/00

(54) **THERMALLY EXPANDABLE RESIN COMPOSITION, THERMALLY EXPANDABLE RESIN SHEET, FOAM AND METHOD FOR PRODUCING SAME**

(30) Priority: 09.05.2011 JP 2011104331
(71) Applicant: Nitto Denko Corporation, Osaka 567-8680 (JP)
(72) Inventor: HAYASHI, Youhei, Ibaraki-shi, Osaka 567-8680 (JP); MITSUOKA, Yoshiaki, Ibaraki-shi, Osaka 567-8680 (JP); UI, Takehiro, Ibaraki-shi, Osaka 567-8680 (JP)
(74) Representative: Schwabe - Sandmair - Marx
(86) International application number: PCT/JP2012/059095
(87) International publication number: WO 2012/153579

(57) **Abstract**

A thermally foamable resin composition includes a base resin, foamable resin particles, and a cross-linking agent, wherein each of the foamable resin particles contains a solid resin and a thermally expandable substance contained in the solid resin.

## Description

### Technical Field

The present invention relates to a thermally foamable resin composition, a thermally foamable resin sheet, a foam, and a method for production thereof, to be specific, to a thermally foamable resin composition, a thermally foamable resin sheet, and a foam which are used in various industrial fields and a method for production thereof.

### Background Art

Conventionally, the thermally foamable resin composition has contained a resin and a foaming agent, and can be foamed by generating a gas by heating. Using such foaming, the thermally foamable resin composition has been widely used in various industrial fields.

For example, the following method has been proposed. A thermally expandable adhesive composition containing a film-formable resin that is solid under normal temperature and a thermally expandable capsule is disposed between a plurality of adherends. Thereafter, they are heated and the film-formable resin is to foamed and cured, so that the adherends are allowed to adhere to each other (ref: for example, Patent Document 1 below).

Also, the following method has been proposed. A reinforcing agent composition containing a polyolefin and a thermally expandable microsphere is disposed on a steel plate of a bodywork. Thereafter, they are heated and the polyolefin is foamed and cured to reinforce the steel plate (ref: for example, Patent Document 2 below).

In the thermally foamable resin composition in Patent Documents 1 and 2 described below, the thermally expandable capsule and the thermally expandable microsphere used as the foaming agent contain a shell made of a thermoplastic resin having gas barrier properties and a low-boiling substance (a core, a thermally expandable agent) contained inside the shell.

### Prior Art Document

### Patent Document

Patent Document 1: Japanese Unexamined Patent Publication No. 2007-106963
Patent Document 2: Japanese Unexamined Patent Publication No. 2004-244508

### Summary of the Invention

### Problems to be solved by the Invention

However, in the thermally foamable resin composition in the above-described Patent Documents 1 and 2, in order to foam the film-formable resin and the polyolefm, it is required that by heating, the low-boiling substance (core) is thermally expanded while the shell is melted or softened. In order to sufficiently melt or soften the shell, the thermally foamable resin composition is required to be heated at high temperature.

Therefore, while a member such as the adherend and the steel plate on which the thermally foamable resin composition is disposed is required to have a sufficient heat resistance, when the member does not have a sufficient heat resistance, in view of protection of the member (for example, a plastic), the thermally foamable resin composition is required to be heated at low temperature. Therefore, there is a disadvantage: sufficient foaming of the thermally foamable resin composition, and furthermore, a sufficient adhesion or reinforcement caused by such foaming cannot be achieved.

Furthermore, there has been a demand for improvement in compressive stress (repulsive force) of the foam.

An object of the present invention is to provide a thermally foamable resin composition, and a thermally foamable resin sheet that can be foamed and crosslinked by heating at low temperature, and a foam that has excellent repulsive force and a method for production thereof. Solution to the Problems

A thermally foamable resin composition of the present invention includes a base resin, foamable resin particles, and a cross-linking agent, wherein each of the foamable resin particles contains a solid resin and a thermally expandable substance contained in the solid resin.

It is preferable that the thermally foamable resin composition of the present invention can be foamed and crosslinked by heating at 120°C or less.

In the thermally foamable resin composition of the present invention, it is preferable that the base resin includes at least one component selected from the group consisting of a rubber, a thermoplastic resin, and a thermosetting resin, and crosslinking of the base resin is to be caused by the cross-linking agent.

It is preferable that the thermally foamable resin composition of the present invention further includes a cross-linking accelerator.

It is preferable that with the thermally foamable resin composition of the present invention, a foam that is foamed by heating the thermally foamable resin composition at 100°C for 30 min has a density of 0.1 to 1.0 g/cm³.

In the thermally foamable resin composition of the present invention, it is preferable that the thermally expandable substance has a boiling point in the range of -160 to 120°C.

In the thermally foamable resin composition of the present invention, it is preferable that the foamable resin particles are obtained by polymerizing a monomer of the resin in the presence of the thermally expandable substance.

In the thermally foamable resin composition of the present invention, it is preferable that the resin is a polystyrene and/or a polystyrene copolymer.

In the thermally foamable resin composition of the present invention, it is preferable that 0.1 to 350 parts by mass of the foamable resin particles relative to 100 parts by mass of the base resin is contained.

A thermally foamable resin sheet of the present invention is a thermally foamable resin composition formed into a sheet, the thermally foamable resin composition including a base resin, foamable resin particles, and a cross-linking agent, wherein each of the foamable resin particles contains a solid resin and a thermally expandable substance contained in the solid resin.

A foam of the present invention is obtained by foaming a thermally foamable resin composition including a base resin, foamable resin particles, and a cross-linking agent by heating, wherein each of the foamable resin particles contains a solid resin and a thermally expandable substance contained in the solid resin.

A foam of the present invention is obtained by foaming a thermally foamable resin sheet by heating, the thermally foamable resin sheet being formed into a sheet from a thermally foamable resin composition including a base resin, foamable resin particles, and a cross-linking agent, wherein each of the foamable resin particles contains a solid resin and a thermally expandable substance contained in the solid resin.

A method for producing a foam of the present invention includes foaming a thermally foamable resin composition including a base resin, foamable resin particles, and a cross-linking agent by heating, wherein each of the foamable resin particles contains a solid resin and a thermally expandable substance contained in the solid resin.

A method for producing a foam of the present invention includes foaming a thermally foamable resin sheet by heating, the thermally foamable resin sheet being formed into a sheet from a thermally foamable resin composition including a base resin, foamable resin particles, and a cross-linking agent, wherein each of the foamable resin particles contains a solid resin and a thermally expandable substance contained in the solid resin.

The method for producing a foam of the present invention, wherein the heating is performed at a temperature of 120°C or less.

### Effect of the Invention

In the thermally foamable resin composition and the thermally foamable resin sheet of the present invention, each of the foamable resin particles contains the solid resin in which the thermally expandable substance is contained, and therefore the thermally expandable substance can be allowed to expand even by heating at low temperature.

Furthermore, the thermally foamable resin composition contains a cross-linking agent, and therefore the base resin can be crosslinked by the cross-linking agent.

Therefore, with the method for producing a foam of the present invention, the base resin can be reliably foamed and the base resin can be crosslinked by the cross-linking agent even by heating at low temperature.

That is, improvement in repulsive force (compressive stress) can be achieved with a foam obtained by crosslinking the base resin with a cross-linking agent and foaming the foamable resin particles, compared with a foam obtained by foaming the same base resin without being crosslinked.

Thus, the thermally foamable resin sheet formed of the thermally foamable resin composition of the present invention can be used in various industrial fields in which heating at low temperature and also excellent repulsive force are required.

### Brief Description of the Drawings

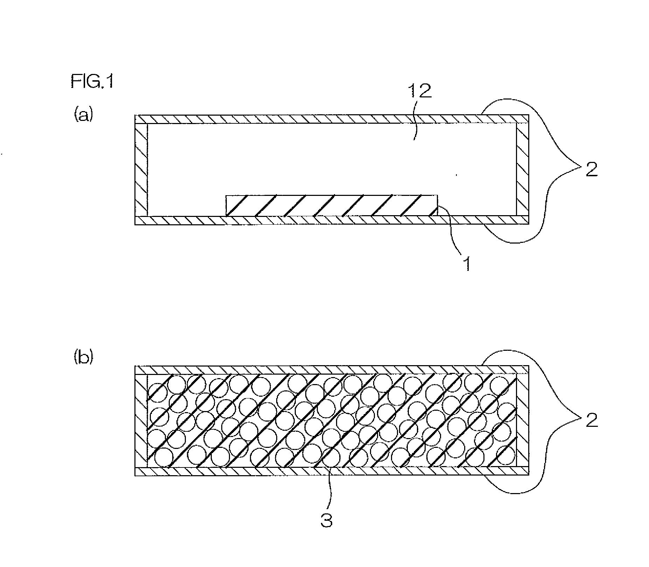

[FIG. 1] FIG. 1 shows sectional views for illustrating one embodiment of a producing method of a foam of the present invention:
(a) illustrating a step of disposing a thermally foamable resin sheet in the internal space of a hollow member, and
(b) illustrating a step of foaming the thermally foamable resin sheet by heating.

### Embodiment of the Invention

A thermally foamable resin composition of the present invention contains a base resin, foamable resin particles, and a cross-linking agent.

In the thermally foamable resin composition of the present invention, the base resin contains at least one component (matrix component) selected from the group consisting of, for example, a rubber, a thermoplastic resin, and a hardening resin.

The rubber is not particularly limited, and examples thereof include synthetic rubbers such as styrene rubber, nitrile rubber, polyisobutylene rubber (PIB), chloroprene rubber (CR), butyl rubber (IIR), ethylene • propylene rubber (EPM), ethylene • propylene diene rubber (EPDM), isoprene rubber (IR), butadiene rubber (BR), urethane rubber, polyamide rubber, silicone rubber, polyether rubber, and polysulfide rubber; and natural rubber (NR).

The rubbers can be used singly or in a combination of two or more.

Of the rubbers, preferably, styrene rubber, nitrile rubber, ethylene • propylene •diene rubber (EPDM), butadiene rubber (BR), and natural rubber (NR) are used.

The styrene rubber is a synthetic rubber containing styrene as an ingredient monomer, and is not particularly limited. Examples of the styrene rubber include stvrene-butadiene rubber (SBR) such as styrene • butadiene random copolymer, styrene • butadiene • styrene block copolymer, styrene • ethylene • butadiene random copolymer, styrene • ethylene • butadiene block copolymer, and styrene • ethylene • butadiene • styrene block copolymer; and styrene • isoprene rubber such as styrene • isoprene • styrene block copolymer.

Preferably, styrene-butadiene rubber (SBR) is used.

The styrene rubber has a styrene content of, for example, 10 to 65 mass%, preferably 20 to 35 mass%.

The nitrile rubber is a synthetic rubber containing a nitrile-group containing monomer such as acrylonitrile as an ingredient monomer, and for example, is a synthetic rubber obtained by copolymerization of acrylonitrile with butadiene. To be specific, examples thereof include acrylonitrile-butadiene rubber (NBR) such as acrylonitrile • butadiene random copolymer and acrylonitrile • butadiene block copolymer.

The nitrile rubber has a nitrile (acrylonitrile) content of, for example, 10 to 50 mass%, preferably 20 to 50 mass%.

The ethylene • propylene • diene rubber is a synthetic rubber obtained by copolymerization of ethylene, propylene, and dienes, and to be specific, obtained by copolymerization of ethylene • propylene copolymer (EPM), and further dienes.

Examples of the dienes include 5-ethylidene-5-norbornene, 1,4-hexadiene, and dicyclopentadiene.

The ethylene • propylene • diene rubber has an ethylene content of, for example, 40 to 90 mass%, preferably 45 to 70 mass%, and a diene content of, for example, 1 to 20 mass%, preferably 3 to 10 mass%.

The butadiene rubber is a synthetic rubber obtained by vulcanization of a polymer of butadiene.

Examples of the natural rubber include raw rubber, for example, a masticated rubber obtained by adding a suitable amount of peptizer (e.g., pentachlorothiophenol.) to a raw rubber, and masticating the mixture.

The Mooney viscosity of the rubber at 100°C is, for example, 0.5 to 150 ML₁₊₄, or preferably 1 to 100 ML₁₊₄.

The rubber has a weight-average molecular weight (GPC: polystyrene standard calibration value) of, for example, 1,000 to 1000000, preferably 10,000 to 100,000.

The density of the rubber is, for example, 0.8 to 2.1 g/cm³, or preferably 0.85 to 2.0 g/cm³.

The thermoplastic resin contains a thermoplastic elastomer, and examples thereof include styrene resin, polyolefm, acrylic resin, polyvinyl acetate, ethylene-vinyl acetate copolymer, polyvinyl chloride, polyacrylonitrile, polyamide (nylon), polycarbonate, polyacetal, polyethylene terephthalate, polyphenylene oxide, polyphenylene sulfide, polysulfone, polyether sulfone, poly ether ether ketone, polyarylsulfone, thermoplastic polyimide resin, thermoplastic urethane resin, polyaminobismaleimide resin, polyamide-imide resin, polyether-imide resin, bismaleimide-triazine resin, polymethylpentene, fluoride resin, liquid crystal polymer, olefin · vinyl alcohol copolymer, ionomer, and polyarylate.

The thermoplastic resin may be used singly, or may be used in a combination.

The thermosetting resin is not particularly limited, and examples thereof include epoxy resin, thermosetting polyimide resin, phenol resin, urea resin, melamine resin, unsaturated polyester resin, diallyl phthalate resin, silicone resin, and thermosetting urethane resin.

The thermosetting resins can be used singly or in a combination of two or more. The density of the thermosetting resin is, for example, 1.0 to 1.5 g/cm³, or preferably 1.1 to 1.4 g/cm³.

Each of these components in the base resin may be used singly or in combination, and preferably, rubber is used singly.

In the thermally foamable resin composition of the present invention, each of the foamable resin particles contains a solid resin and a thermally expandable substance contained (impregnated) in the solid resin.

An example of the resin includes a resin that can uniformly contain the thermally expandable substance and furthermore, that is not easily cured by heating. Preferably, a thermoplastic resin is used.

Those thermoplastic resins given as examples of the base resin may be used as the thermoplastic resin, and preferably, styrene resin and acrylic resin are used.

The styrene resin is, for example, a styrene polymer (styrene homopolymer) obtained by polymerizing a monomer containing a styrene monomer. Examples of styrene monomer include styrene, and styrene derivatives such as α-methylstyrene, cyclo-halogenated styrene, cyclo-alkylated styrene, 2-vinyltoluene, 3-vinyltoluene, and 4-vinyltoluene. These styrene monomers are used singly, or used in a combination of two or more. As the styrene monomer, preferably, styrene is used.

As the styrene polymer, preferably, polystyrene (polystyrene homopolymer) is used.

An example of the styrene resin includes a styrene copolymer (a polystyrene copolymer) of the above-described styrene monomer and a copolymerizable monomer which is copolymerizable with the styrene monomer. Examples of the copolymerizable monomer include an ester (that is, (meth)acrylate) of (meth)acrylate (acrylic acid and/or methacrylic acid) and an alcohol having 1 to 8 carbon atoms, dimethyl fumarate, (meth)acrylonitrile, vinyl cyanide, ethylene, butadiene, divinylbenzene, and alkylene glycol dimethacrylate. These copolymerizable monomers can be used singly or in a combination of two or more. As the copolymerizable monomer, preferably, (meth)acrylate, acrylonitrile, ethylene, and butadiene are used.

As the styrene copolymer, preferably, a (meth)acrylate-styrene copolymer (that is, a methyl methacrylate-styrene copolymer (MS) and/or a methyl acrylate-styrene copolymer), an acrylonitrile-ethylene-styrene copolymer (AES), an acrylonitrile-styrene copolymer (AS), and an acrylonitrile-butadiene-styrene copolymer (ABS) are used, or more preferably, MS and AS are used.

MS is a block or random copolymer of methyl (meth)acrylate and styrene, and has a methyl (meth)acrylate content of, for example, 10 to 60 mass%.

AS is a block or random copolymer of acrylonitrile and styrene, and has an acrylonitrile content of, for example, 10 to 60 mass%.

Examples of the acrylic resin include polymethyl (meth)acrylate (that is, polymethyl acrylate and/or polymethyl methacrylate), polyethyl (meth)acrylate, and polypropyl (meth)acrylate.

The resin is formed into a solid (that is, not hollow) and the density thereof is, for example, 0.9 to 2.0 g/cm³, or preferably 1.0 to 1.5 g/cm³.

The glass transition temperature of the resin is, for example, 50 to 110°C, or preferably 80 to 90°C.

The thermally expandable substance is a substance which expands by heating and to be specific, is a substance which expands, that is, gasifies (vaporizes or boils) at a specific temperature to be described later. Examples thereof include a hydrocarbon, a halogenated hydrocarbon, and a non-inflammable gas.

Examples of the hydrocarbon include a saturated hydrocarbon and an unsaturated hydrocarbon. Preferably, a saturated hydrocarbon is used.

Examples of the saturated hydrocarbon include a straight chain alkane, a branched chain alkane, and a cycloalkane.

An example of the straight chain alkane includes a straight chain alkane having 1 to 7 carbon atoms (an aliphatic hydrocarbon) such as methane, ethane, propane, butane, pentane, hexane, and heptane.

Examples of the branched chain alkane include branched alkanes having 4 to 7 carbon atoms such as 2-methylpropane, 2-methylbutane, 2,2-dimethylpropane, 2-methylpentane, 3-methylpentane, 2,3-dimethylbutane, and 2,4-dimethylpentane.

An example of the cycloalkane includes a cycloalkane having 3 to 7 carbon atoms such as cyclopropane, cyclobutane, cyclopentane, cyclohexane, and cycloheptane.

As the saturated hydrocarbon, preferably, a straight chain alkane is used.

Examples of the halogenated hydrocarbon include chlorohydrocarbon such as dichloromethane (CCl₂H₂); fluorohydrocarbon such as difluoromethane (CF₂H₂); and chlorofluorohydrocarbon such as Freon 22 (trademark, CHClF₂), Freon 12 (trademark, CCl₂F₂), and Freon 113 (trademark, CCl₂FCClF₂).

An example of the non-inflammable gas includes carbon dioxide.

Of the thermally expandable substances, preferably, a hydrocarbon is used.

The boiling point of the thermally expandable substance is, for example, -160 to 120°C, preferably -50 to 100°C, or more preferably -5 to 70°C.

When the boiling point of the thermally expandable substance exceeds the above-described range, the foaming of the thermally foamable resin composition at low temperature may be difficult. When the boiling point of the thermally expandable substance is below the above-described range, it may be difficult to achieve the resin uniformly containing the thermally expandable substance.

The foamable resin particles can be obtained by polymerizing the monomer of the resin described above in the presence of a solvent and the thermally expandable substance. Alternatively, the foamable resin particles can be obtained by polymerizing the monomer of the resin described above in the absence of the solvent and in the presence of the thermally expandable substance.

Preferably, the monomer of the resin is polymerized in the presence of the solvent and the thermally expandable substance.

Examples of the solvent include an aqueous solvent such as water and an organic solvent such as toluene. Preferably, an aqueous solvent is used.

To be specific, the foamable resin particles are obtained by allowing the monomer to be aqueously-dispersed and suspension-polymerized in the aqueous solvent into which a dispersant is blended and the thermally expandable substance is blown (flowed). The above-described polymerization method achieves the thermally expandable substance uniformly contained in the resin.

The foamable resin particle obtained in this way is formed into a solid sphere (bead) or a solid pellet. Preferably, the foamable resin particle is formed into a solid bead.

The foamable resin particles have an average particle size of, for example, 0.10 to 4.0 mm, preferably 0.15 to 2.0 mm.

When the average particle size of the foamable resin particles exceeds the above-described range, the design, and the uniformity of foamability thereof may be reduced. When the average particle size of the foamable resin particles is below the above-described range, the thermally expandable substance easily volatilizes and the storage stability thereof may be damaged.

In the foamable resin particle, the thermally expandable substance is contained in the solid resin.

That is, in the foamable resin particle, the thermally expandable substance penetrates from the outside surface of the resin, which is solid (not hollow) and particulate, into the inside thereof.

The thermally expandable substance content relative to 100 parts by mass of the resin is, for example, 1 to 10 parts by mass, preferably 2 to 8 parts by mass.

In this way, in the foamable resin particles, the thermal expansion starts at a temperature (a thermal expansion starting temperature) of low temperature, to be specific, at, for example, 120°C or less (to be specific, 70 to 120°C), 110°C or less (to be specific, 70 to 110°C), or furthermore 100°C or less (to be specific, 70 to 120°C).

The density of the foamable resin particle after the thermal expansion is, for example, 0.005 to 0.5 g/cm³, or preferably 0.01 to 0.1 g/cm³.

The thermal expansion ratio of the foamable resin particles at 100°C is, though depending on the content proportion of the thermally expandable substance, for example, 2 to 200 times, or preferably 10 to 100 times.

A commercially available product (foamable beads) can be used as the foamable resin. Examples thereof include "STYRODIA" (foamable polystyrene beads), "HEATPOR" (foamable acrylonitrile-styrene copolymer beads), and "CLEARPOR" (foamable methylmethacrylate-styrene copolymer beads) (the above are manufactured by JSP.); "Eslen Beads" (foamable polystyrene beads) and "PN beads" (special foamable polystyrene beads) (the above are manufactured by SEKISUI PLASTICS CO., LTD.); and "KANEPEARL" (foamable polystyrene beads or foamable polymethylmethacrylate beads, manufactured by Kaneka Corporation).

In the thermally foamable resin composition, the mixing ratio of the foamable resin particles relative to 100 parts by mass of the base resin is, for example, 0.1 to 350 parts by mass, preferably 5 to 320 parts by mass.

When the mixing ratio of the foamable resin particles is below the above-described range, the expansion ratio becomes excessively low, and the base resin may not be sufficiently foamed. On the other hand, when the mixing ratio of the foamable resin particles is more than the above-described range, the foamable resin particles may be dropped from the base resin.

The cross-linking agent causes, for example, crosslinking of the base resin. Preferably, a cross-linking agent that undergoes crosslinking reaction at a low temperature to be described later (a temperature of 120°C or less) is used.

Examples of the cross-linking agent include, for example, sulfur, a sulfur compound (e.g., 4,4'-dithiodimorpholine), selenium, magnesium oxide, lead monoxide, organic peroxide (e.g., cumene peroxide, dimethyl di(t-butylperoxy) hexane, bis(t-butylperoxyisopropyl) benzene), polyamine, oxime (e.g., p-quinone dioxime, p,p'-dibenzoylquinone dioxime), a nitroso compound (e.g., p-dinitrosobenzene), quinoid (e.g., poly-p-dinitrosobenzene), resin (e.g., alkylphenol-formaldehyde resin, melamine-formaldehyde condensate), and ammonium salt (e.g., ammonium benzoate).

The cross-linking agent may be used singly or in a combination of two or more.

As the cross-linking agent, in view of the low temperature crosslinking, preferably, sulfur is used.

As the sulfur, for example, powder sulfur (pulverized sulfur), insoluble sulfur, surface-treated sulfur, precipitated sulfur, and colloid sulfur are used. Preferably, powder sulfur is used.

The powder sulfur has an average particle size of, for example, 45 to 150 µm, preferably 45 to 100 µm.

The cross-linking agent can be prepared, when the thermally foamable resin composition is prepared by fractional charging, as a masterbatch along with a small amount of base resin and a binder component (e.g., base resin such as rubber).

The mixing ratio of the cross-linking agent is suitably selected because the crosslinking efficiency is different depending on its type, and for example, is 0.5 to 60 parts by mass, preferably 1 to 40 parts by mass, more preferably 1 to 15 parts by mass, for example, relative to 100 parts by mass of the base resin.

The thermally foamable resin composition may further contain a cross-linking accelerator.

The cross-linking accelerator contains an amine compound, and examples thereof include thiazole compounds such as 2-mercaptobenzothiazole and its salt (e.g., sodium salt, zinc salt), dibenzothiazyl disulfide, and 2-(4'-morpholinodithio)benzothiazole; dithiocarbamic acid compounds such as dimethyldithiocarbamate (e.g., sodium salt, zinc salt, copper, and ferric salt), diethyldithiocarbamate (e.g., sodium salt, zinc salt, and tellurium salt), dipropyldithiocarbamate (e.g., sodium salt, zinc salt, and tellurium salt), dibutyldithiocarbamate (e.g., sodium salt, and zinc salt), dibenzyldithiocarbamate (e.g., zinc salt), N-pentamethylenedithiocarbamate (zinc salt and piperidine salt), and N-ethyl-N-phenyldithiocarbamate (e.g., zinc salt); guanidine compounds such as diphenylguanidine and di-o-tolylguanidine; sulfene amide compounds such as benzothiazyl-2-diethylsulfene amide and N-cyclohexyl-2-benzothiazylsulfene amide; thiuram compounds such as tetramethylthiuram monosulfide and tetramethylthiuram disulfide; xanthic acid compounds such as sodium isopropylxanthate and isopropylxanthic acid zinc; aldehyde ammonia compounds such as acetaldehyde ammonia and hexamethylenetetramine; aldehyde amine compounds such as n-butylaldehydeaniline and butylaldehydemonobutylamine; and thiourea compounds such as diethylthiourea and trimethylthiourea.

These cross-linking accelerators may be used singly, or may be used in combination.

As the cross-linking accelerator, in view of crosslinking rate, preferably, dithiocarbamic acid compound and aldehyde amine compound are used.

The mixing ratio of the cross-linking accelerator is, in view of anti-blooming properties and crosslinking rate, for example, 0.5 to 10 parts by mass, preferably 1 to 5 parts by mass relative to 100 parts by mass of the base resin.

To the thermally foamable resin composition, known additives such as the following can be added at a suitable ratio within the range that does not hinder the effects of the present invention. The examples of the additives include tackifier, filler, and furthermore, curing agent, another foaming agent (foaming agent other than the foamable resin particles), foaming accelerating agent, thixotropic agent, lubricant, pigment, antiscorch agent, stabilizer, softener, plasticizer, age resister, antioxidant, ultraviolet absorber, coloring agent, antifungal agent, and fire retardant.

Examples of the tackifier include rosin resin, terpene resin (including terpenephenol copolymer and hydrogenated terpene resin), coumarone-indene resin, alicyclic saturated hydrocarbon resin, petroleum resin (e.g., hydrocarbon petroleum resins such as C5 aliphatic/C9 aromatic copolymer petroleum resin, and aromatic petroleum resin), and phenol resin.

These tackifiers may be used singly or in combination, and preferably, petroleum resin is used.

The tackifier has a softening point of, for example, 50 to 150°C, preferably 50 to 130°C.

The mixing ratio of the tackifier relative to 100 parts by mass of the base resin is, for example, 1 to 20 parts by mass, preferably 3 to 15 parts by mass.

Examples of the filler include oxides such as zinc oxide, talc, titanium oxide, and silica; hydroxides such as aluminum hydroxide and magnesium hydroxide; calcium carbonate; barium sulfate; and carbon black. These fillers may be used singly or in combination, preferably, oxide, and more preferably, zinc oxide (zinc white) is used.

The filler has an average particle size of, for example, 0.01 to 11 µm, preferably 0.2 to 1 µm.

The mixing ratio of the filler relative to 100 parts by mass of the base resin is, for example, 1 to 20 parts by mass, preferably 1 to 10 parts by mass.

The thermally foamable resin composition is prepared, for example, by blending simultaneously (simultaneous charging) the foamable resin particles, base resin, and cross-linking agent, and also cross-linking accelerator and additive blended as necessary.

To be specific, the above-described components are kneaded, for example, by kneaders such as a mixing roll, pressure kneader, and extruder, to prepare a thermally foamable resin composition as a kneaded material.

In kneading by kneaders, for example, the base resin, the foamable resin particles, and the cross-linking agent are heated at a temperature below the thermal expansion starting temperature of the foamable resin particles, to be specific, at a temperature of the normal temperature (20°C) or more and below 70°C, preferably at a temperature of 20 to 55°C.

Alternatively, the thermally foamable resin composition can also be prepared by fractional charging described below.

In fractional charging, first, the base resin, and a portion of the additive (e.g., tackifier) added as necessary are blended, and the mixture is kneaded by a kneader to prepare a first kneaded material.

Then, the first kneaded material, the cross-linking agent (preferably, masterbatch of the cross-linking agent), and a cross-linking accelerator added as necessary, and a remaining portion of the additive (e.g., filler) are blended, and the mixture is kneaded with a kneader to prepare a second kneaded material.

In preparation of the second kneaded material, because the crosslinking reaction progresses partly by the cross-linking agent, the prepared second kneaded material has, for example, a smaller torque T_{15 min} when kept at 90°C for 15 min compared with torque T_{30 min} when kept at 90°C for 30 min. To be specific, their ratio (T_{15 min}/T_{30 min}) is, for example, 0.6 or more and below 1, preferably 0.6 to 0.85, to be specific, T_{15 min} is, for example, 1.5 to 12dN • m, preferably 2 to 12dN • m, and T_{30 min} is, for example, 2.5 to 30dN • m, preferably 3 to 15dN • m.

When the torque is within the above-described range, in preparation of a third kneaded material next, the thermally foamable resin particles can be homogeneously kneaded into the second kneaded material, and the thermally foamable resin particles can be homogeneously dispersed in the second kneaded material.

The measurement method for the torque is described in Evaluation section in Examples.

Thereafter, the second kneaded material and the foamable resin particles are blended and the mixture is kneaded to prepare a third kneaded material. The prepared third kneaded material is used as the thermally foamable resin composition.

The temperature at which the first to third kneaded materials are prepared is suitably selected, and to be specific, the temperature at which the first kneaded material is prepared is, for example, 20 to 150°C, preferably 20 to 120°C.

The temperature at which the second kneaded material is prepared is a temperature that suppresses reaction between the cross-linking agent and the cross-linking accelerator, and to be specific, for example, 20 to 80°C, preferably 20 to 55°C. When the temperature at which the second kneaded material is prepared is more than the above-described range, the crosslinking reaction excessively progresses, and the third kneaded material may not be prepared. Meanwhile, when the temperature at which the second kneaded material is prepared is below the above-described range, the second kneaded material may not be prepared.

Furthermore, the temperature at which the third kneaded material is prepared is below the thermal expansion starting temperature of the foamable resin particles, to be specific, a temperature of normal temperature (20°C) or more and below 70°C, preferably a temperature of 20 to 55°C. When the temperature at which the third kneaded material is prepared is more than the above-described range, foaming may occur before forming the thermally foamable resin sheet.

The mixing ratio of the components in fractional charging is suitably selected. In particular, the mixing ratio of the cross-linking agent blended in the second kneaded material relative to the 100 parts by mass of the first kneaded material is, for example, 0.5 to 100 parts by mass, preferably 1 to 60 parts by mass. The mixing ratio of the cross-linking accelerator relative to 100 parts by mass of the first kneaded material is, for example, 1 to 50 parts by mass, preferably 1 to 30 parts by mass. The mixing ratio of the remaining portion of the additive (filler) is, for example, 1 to 300 parts by mass, preferably 5 to 100 parts by mass.

The mixing ratio of the foamable resin particles blended in the third kneaded material relative to 100 parts by mass of the second kneaded material is, for example, 1 to 300 parts by mass, preferably 5 to 150 parts by mass.

Thereafter, the prepared thermally foamable resin composition is formed into a predetermined form such as a sheet form by, for example, a molding method such as calendering, extrusion molding, injection molding, or press molding.

In molding of the thermally foamable resin composition, the kneaded material is heated at below the thermal expansion starting temperature of the foamable resin particles, to be specific, at a temperature of normal temperature (20°C) or more and below 70°C, preferably at a temperature of 20 to 55°C.

When the kneaded product is formed into a sheet, the thickness of the sheet is, for example, 0.1 to 10 mm.

In this way, the thermally foamable resin composition can be obtained as a sheet. That is, the thermally foamable resin sheet can be obtained.

With the thermally foamable resin composition of the present invention, each of the foamable resin particles is formed in such a way that the thermally expandable substance is contained in the resin, and therefore the thermally expandable substance can be allowed to uniformly expand in the resin even by heating at low temperature.

Thus, even if the heating is performed at low temperature, the base resin can be reliably foamed.

That is, the thermally foamable resin composition can foam at, for example, a temperature of 120°C or less (to be specific, 70 to 120°C). In addition, the thermally foamable resin composition may foam at a temperature of 110°C or less (to be specific, 70 to 110°C) and furthermore, foam at a temperature of 100°C or less (to be specific, 70 to 100°C).

The thermally foamable resin composition can be foamed by being heated at the above-described desired temperature (low temperature).

At the same time with the above-described foaming, because the thermally foamable resin composition contains a cross-linking agent, the cross-linking agent causes crosslinking of the base resin. The crosslinked foam can be obtained in this manner. Thus, the repulsive force of the foam can be improved.

That is, repulsive force (compressive stress) can be improved in a foam obtained by crosslinking the base resin with a cross-linking agent and foaming the base resin with the foamable resin particles, compared with a foam obtained by foaming the same base resin with the foamable resin particles without being crosslinked. To be specific, the strength ratio, that is, a ratio of 30% compressive stress CS of the crosslinked foam relative to 30% compressive stress CS of the uncrosslinked foam (30% compressive stress CS of the crosslinked foam/30% compressive stress CS of the uncrosslinked foam) is, for example, 1.1 to 6.

Therefore, a space of a member or a space between the members can be filled (charged) with the thermally foamable resin composition of the present invention by low temperature heating that does not damage or degrade the member (e.g., a resin molded product composed of, for example, thermoplastic resin (plastic)) in which the thermally foamable resin composition is disposed, and thus the thermally foamable resin composition of the present invention can be used in various industrial fields in which excellent repulsive force is required.

For example, the foam obtained by allowing the above-described thermally foamable resin composition to foam can be used as a filler of industrial products in various industrial fields. The filler is used to fill in space between various members or the internal space of a hallow member.

FIG. 1 shows sectional views for illustrating one embodiment of a producing method of a foam of the present invention.

Next, a method of filling the foam in the internal space of the hollow member is described with reference to FIG. 1.

In FIG. 1, in order to fill in an internal space 12 of a hollow member 2 with a foam 3, for example, a thermally foamable resin sheet 1 made of the thermally foamable resin composition is disposed in the internal space 12 of the hollow member 2. The thermally foamable resin sheet 1 is disposed so as to be in contact with the inner surface of the hollow member 2.

Thereafter, the disposed thermally foamable resin sheet 1 is heated with the above-described hollow member 2 to foam the thermally foamable resin sheet 1, thereby forming the foam 3. In this way, the internal space 12 of the hollow member 2 is filled in with the formed foam 3.

The heating method of the thermally foamable resin sheet 1 is not particularly limited. Examples thereof are as follows: a method of allowing the hollow member 2 on which the thermally foamable resin sheet 1 is disposed to stand (be stored) under hot air atmosphere (air) of a dryer (for example, an oven such as a hot air dryer), a method of immersing the above-described hollow member 2 in heated liquid (a heating medium), a method of applying far-infrared rays to the above-described hollow member 2, and a method of using a reaction heat of a chemical reaction.

The space between the above-described various members can be filled with the foam 3 in the same manner as in the above-described method of filling in the internal space 12 of the hollow member 2 with the foam 3.

The above-described filler can impart various effects to the above-described member or hollow member. Examples of the effect include reinforcement, vibration damping (vibration proofmg), sound proofing, dust proofing, heat insulation, buffering, watertight and air tight effects, or adhesion. Therefore, the foam 3 can be suitably used as a filler of various industrial products, which fills in space between various members or the internal space of the hollow member. Examples thereof include a reinforcing material, a vibration damping material (a vibration proofing material), a sound proofing material, a dust proofing material, a heat insulating material, a buffer material, a waterproofing material, or an adhesive material.

Among all, the thermally foamable resin composition of the present invention is used in seals for automobiles, electric appliances, and housing products. In such a case, the thermally foamable resin sheet formed of the thermally foamable resin composition is fixed in gaps of an automobile, an electric appliance, or a housing product and is then allowed to foam. In this way, the gap is filled in with the foam. That is, the thermally foamable resin sheet, preferably as a sealing material for the exterior of automobiles, a sealing material for electric appliances, a sealing material for housing products, or the like, is used as a sealing material for sealing space of various members of automobiles, electric appliances, and housing products. The foam can be used for vibration proofing, sound proofing, dust proofing, heat insulation, buffering, watertight and air tight effects as a vibration proofing material, a sound proofing material, a dust proofing material, a heat insulating material, a buffer material, a waterproofing material, and the like of automobiles, electric appliances, or housing products.

The thermally foamable resin composition of the present invention is, for example, used in the hollow member of the automobile, to be specific, in vibration damping, heat insulation, sound proofing, and reinforcement of a pillar. In such a case, a sheet (a thermally foamable resin sheet) formed of the thermally foamable resin composition is fixed in the internal space of the pillar and is then foamed by heating. Then, the internal space of the pillar is filled in with the foam. In this way, the reinforcement of the pillar can be achieved, while the vibration and/or noise of an engine and furthermore, wind noise are prevented from being transferred into the inside of the automobile.

In addition, the thermally foamable resin composition of the present invention can be used in, for example, reinforcement of a structural member of the automobile, to be specific, a steel plate of bodywork, a bumper, an instrument panel, and the like. In such a case, first, a steel plate reinforcing sheet is produced by laminating a constraining layer formed of a glass cloth or the like on a sheet (the thermally foamable resin sheet) formed of the thermally foamable resin composition. Next, the thermally foamable resin sheet of the produced steel plate reinforcing sheet is attached to the above-described structural member of the automobile and is then allowed to foam by heating. In this way, the structural member of the automobile can be reinforced by the steel plate reinforcing sheet including the foam.

On the other hand, when the thermally expandable capsule in the above-described Patent Document 1 is kneaded to prepare the thermally foamable resin composition as a kneaded product, the shearing force (shear) is applied to the thermally expandable capsule at the time of kneading, and therefore the shell is damaged and the core easily flows out. As a result, even when the kneaded product is heated, it may be difficult to allow the resin to foam.

However, the foamable resin particles of the present invention do not have the core-shell structure as that in the above-described Patent document 1 and have a structure of containing the thermally expandable substance in the solid resin. Therefore, even when the shearing force (shear) is applied to the foamable resin particles at the time of kneading, the thermally expandable substance can be prevented from flowing out.

Thus, by heating the kneaded material, the base resin can be reliably foamed.

Furthermore, at the same time with the above-described foaming, the base resin can be crosslinked.

The thus obtained foam (foam immediately after foaming) has density D of, for example, 0.1 to 1.0 g/cm³, preferably 0.1 to 0.5 g/cm³. The foam density is measured in conformity with JIS Z 8807.

When the density of the foam is outside the above-described range, the filling properties of the foam may be reduced.

The expansion ratio ER (including ER_{15 min} and ER_{30 min} to be described later)(that is, volume expansion ratio at the time of foaming of the thermally foamable resin composition. The expansion ratio of foam immediately after foaming) is, for example, 2 to 30 times, preferably 2 to 20 times, and more preferably 5 to 16 times.

The expansion ratio is calculated as [the density of the thermally foamable resin composition (the thermally foamable resin composition before foaming)]/[the density of the foam (the thermally foamable resin composition after foaming)].

The density of the above-described foam decreases gradually as the foam is heated. In other words, the expansion ratio of the foam increases gradually as time elapses after foaming.

To be specific, the density of the foam after elapse of 15 min after the start of foaming, D_{15 min} is, for example, 0.1 to 1/cm³, preferably 0.1 to 0.5 g/cm³, and the density of the foam after elapse of 30 min after the start of foaming, D_{30 min} is, for example, 0.1 to 1.0 g/cm³, preferably 0.1 to 0.5 g/cm³.

Furthermore, although the 30% compressive stress CS of the foam varies depending on the crosslinking conditions and foaming conditions, the 30% compressive stress CS of the foam when foaming by heating at 100°C for 15 min, i.e., the 30% compressive stress CS_{15 min}, is preferably larger than the 30% compressive stress CS_{30 min} when foaming by heating at 100°C for 30 min, and the ratio (CS_{15 min}/CS_{30 min}) is, for example, 0.95 to 5, preferably over 1 and 3.5 or less.

To be specific, the CS_{15 min} is, for example, 10 to 100N/cm², preferably 20 to 100N/cm², and the CS_{30 min} is, for example, 90N/cm², preferably 20 to 90N/cm².

When the foam has a 30% compressive stress CS of below the above-described range, sufficient reinforcement may not be obtained.

The 30% compressive stress CS of the foam is described in detail in Examples below. Examples

While the present invention will be described hereinafter in further detail with reference to Examples and Comparative Examples, the present invention is not limited to these Examples and Comparative Examples.

### Examples 1 to 19 and Comparative Examples 1 to 5

In accordance with the mixing formulation of Table 1 to Table 5, the rubber and tackifier (not in Examples 11 to 19 and Comparative Examples 4 and 5) were kneaded with a mixing roll at 100°C and a number of revolution of 20min⁻¹ for 5 min, thereby preparing a first kneaded material.

Then, in accordance with the mixing formulation of Table 1 to Table 5, the first kneaded material, a filler, a cross-linking agent (not in Comparative Examples 1 to 5), and a cross-linking accelerator (not in Comparative Examples 1 to 5) were kneaded with a mixing roll at 20°C and a number of revolution of 20min⁻¹ for 5 min, thereby preparing a second kneaded material.

Thereafter, 40 parts by mass of the second kneaded material and 20 parts by mass of the foamable resin particles were kneaded with a mixing roll at 50°C and a number of revolution of 20min⁻¹ for 5 min, thereby preparing a third kneaded material (thermally foamable resin composition).

Thereafter, the third kneaded material is pressed with a press molding apparatus at 50°C and a pressure of 50MPa for 5 min, thereby forming a thermally foamable resin sheet having a thickness of 5 mm.

### (Evaluation)

### 1. Torque (T_{15 min} and T_{30 min} of the second kneaded material)

The second kneaded materials prepared in Examples 1 to 19 were subjected to a torque measurement using a moving die rheometer (rheometer manufactured by Alpha Technologies, model number: MDR 2000P) under the measurement conditions below. The results are shown in Table 1 to Table 5.

Die Oscillation Frequency : 1.66Hz
Heating temperature: 90°C
Measurement time : after 15 min and 30 min after reaching 90°C
Oscillation Angle: 0.5±0.01 degrees
2. Density (D_{15 min} and D_{30 min}) and expansion ratio (ER_{15 min} and ER_{30 min})

The thermally foamable resin sheets each having a thickness of 5 mm were stamped out into circular shapes each having a diameter of 20 mm to produce samples. Thereafter, the produced samples were put in an oven at 100°C to be heated for 15 minutes, thereby allowing the samples to foam and then obtaining foams.

Each of the density before (sample before foaming) and after foaming (D_{15 min}) was measured in conformity with JIS Z8807 to calculate the expansion ratio (ER_{15 min}) therefrom.

The heating time was changed to 30 min to obtain foam, and the density (D_{30 min}) and the expansion ratio (ER_{30 min}) of the foam were measured.

The results are shown in Table 1 to Table 5.

### 3. Compressive Stress (repulsive force)

A foam obtained as described above by heating for 15 min was cut out into a sheet to give a thickness of 25 mm, and the compressive stress in the thickness direction of the foam that was cut out was measured with a compression tester.

That is, when the foam is compressed to give a thickness of 7.5 mm (that is, 30% the thickness before compression) at a compression speed of 10 mm/min, the stress (pressure) applied to the foam is converted to the stress to the foam per unit area, and the converted value was regarded as the 30% compressive stress (CS_{15 min})(unit: N/cm²).

The foam obtained by heating for 30 min was also measured in the same manner as described above, thereby calculating the 30% compressive stress (CS_{30 min}).

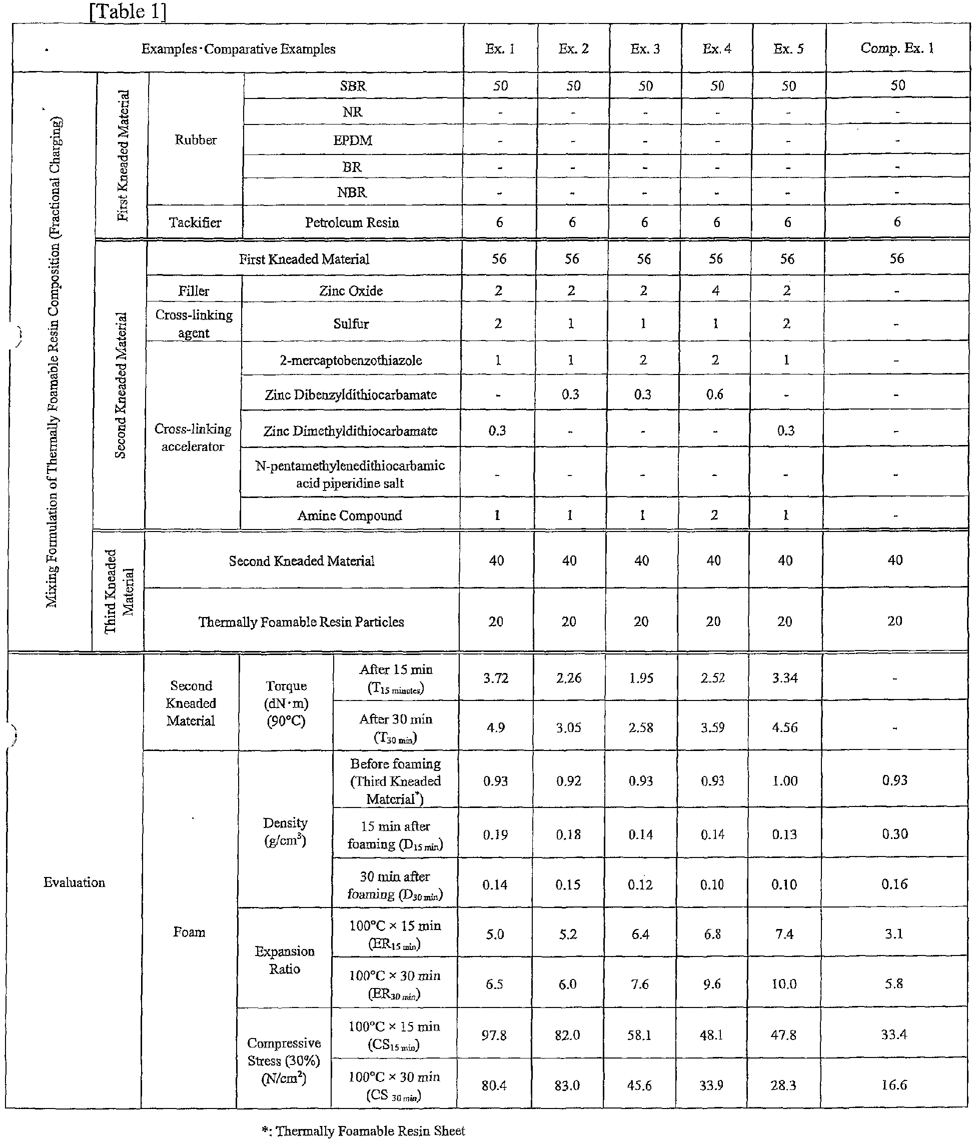

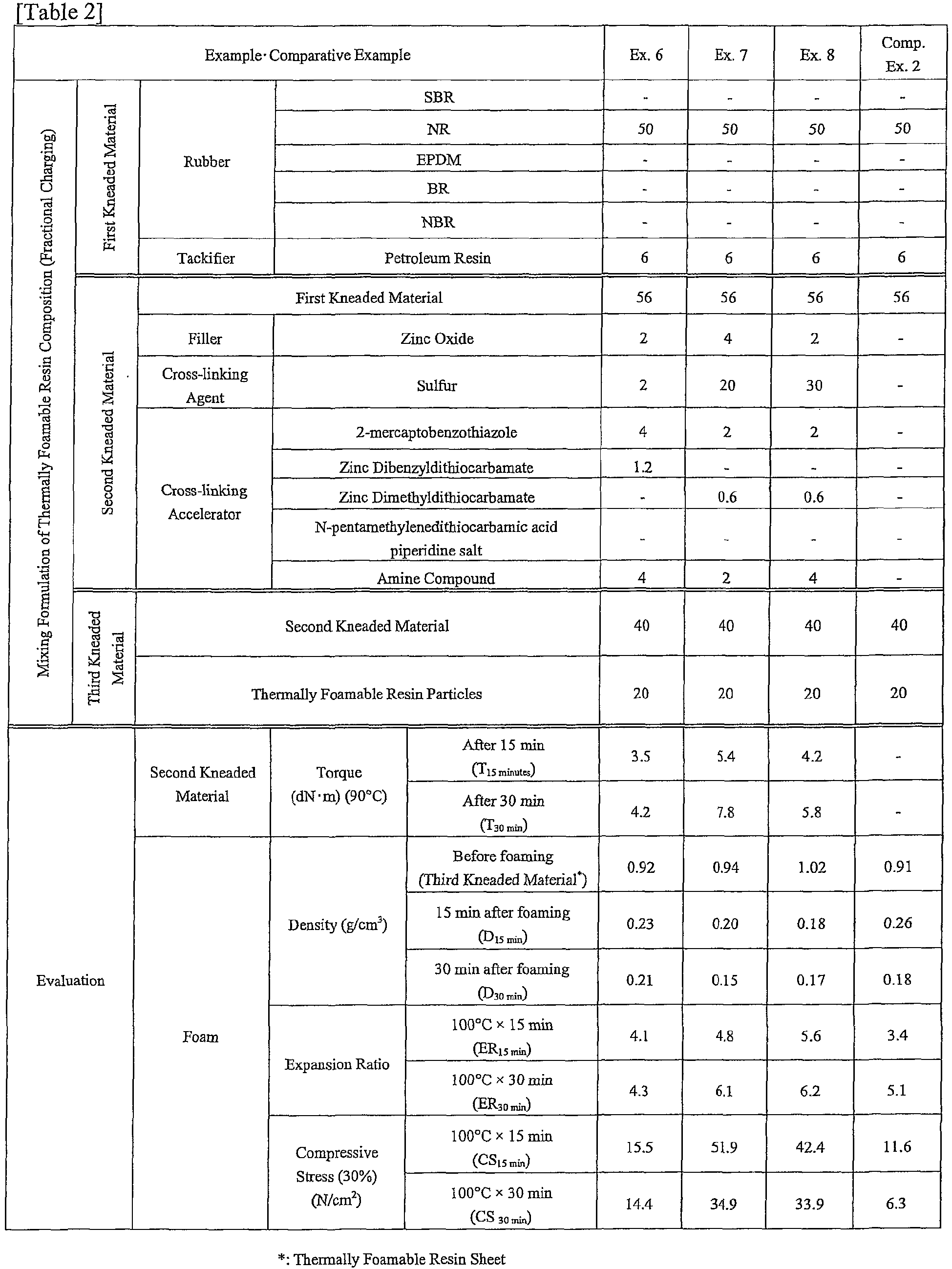

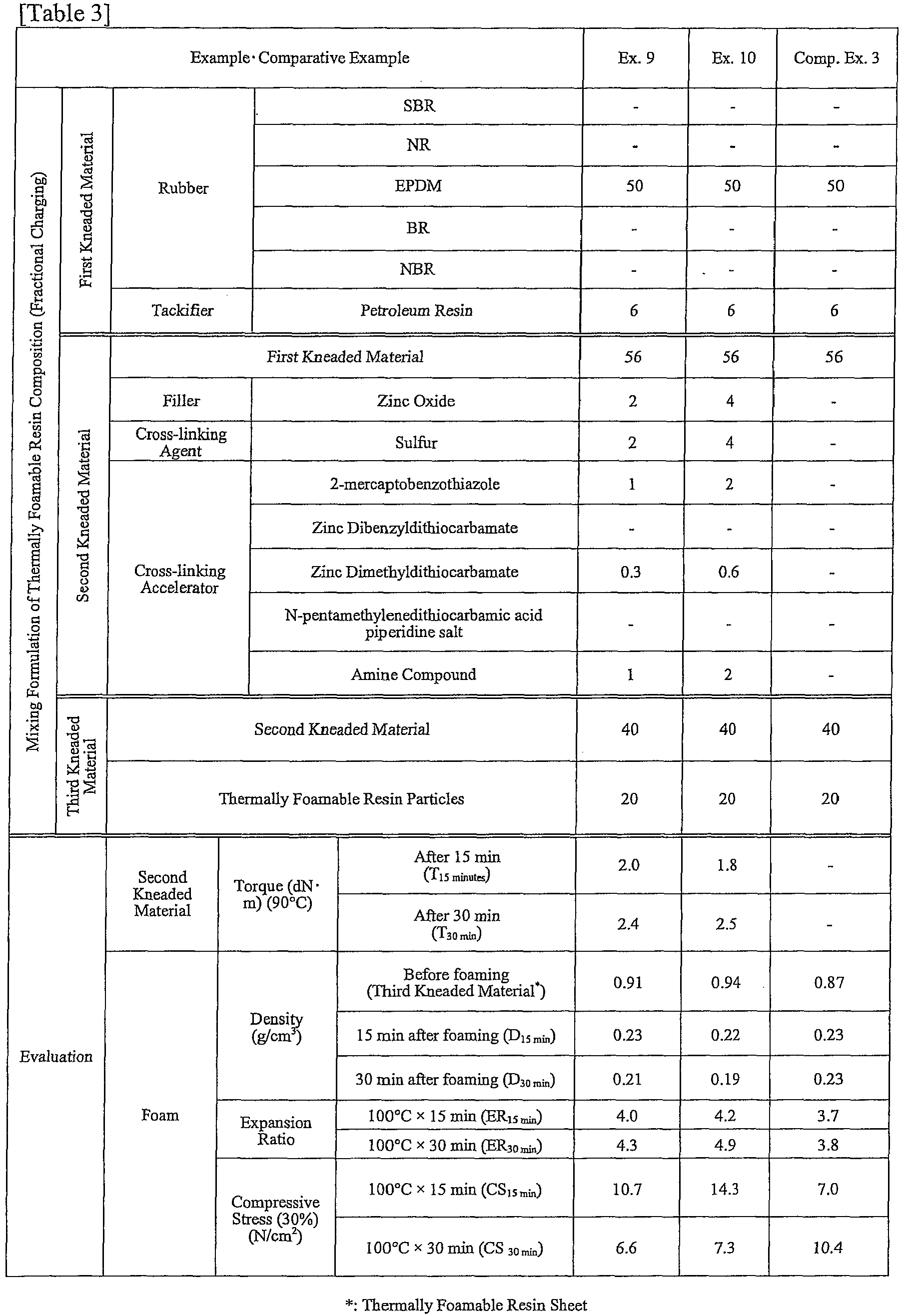

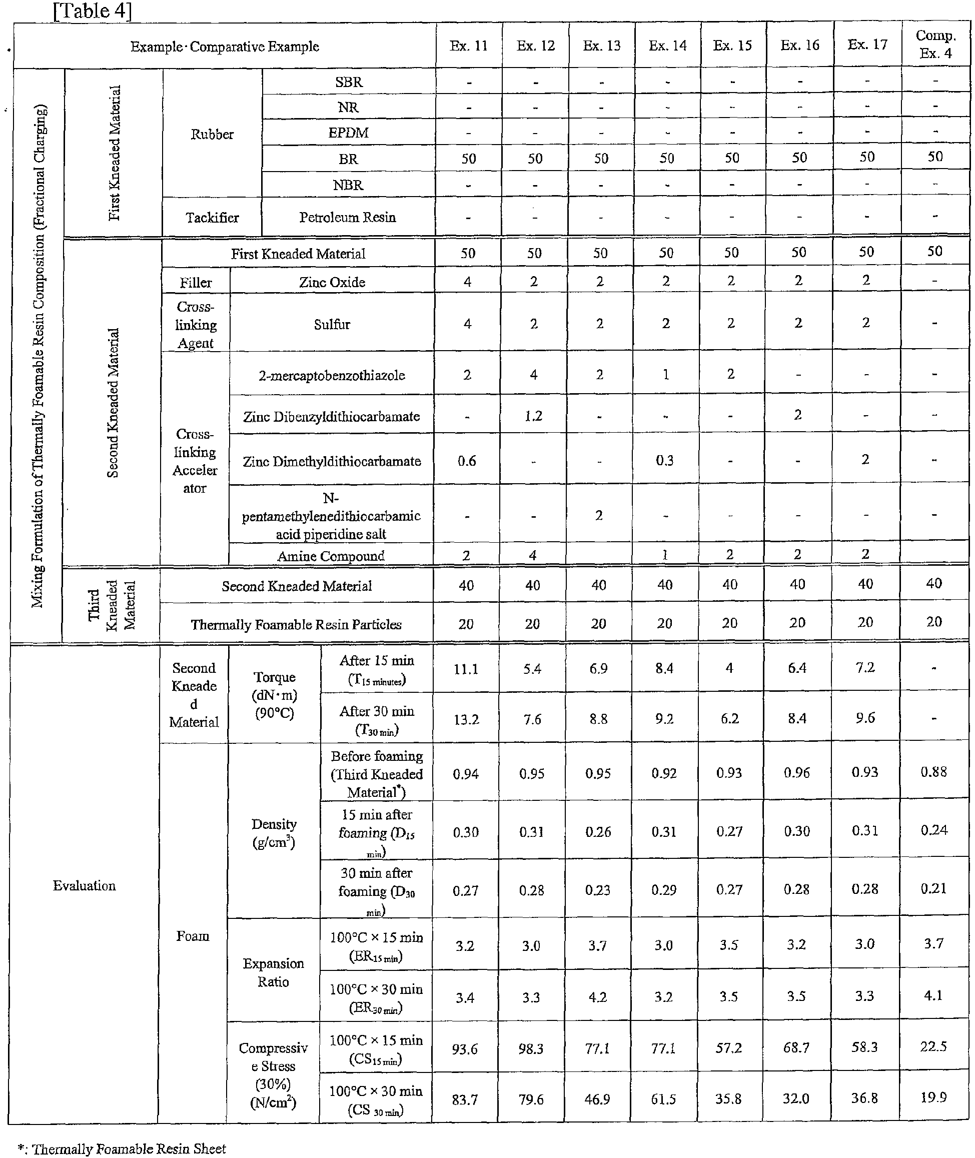

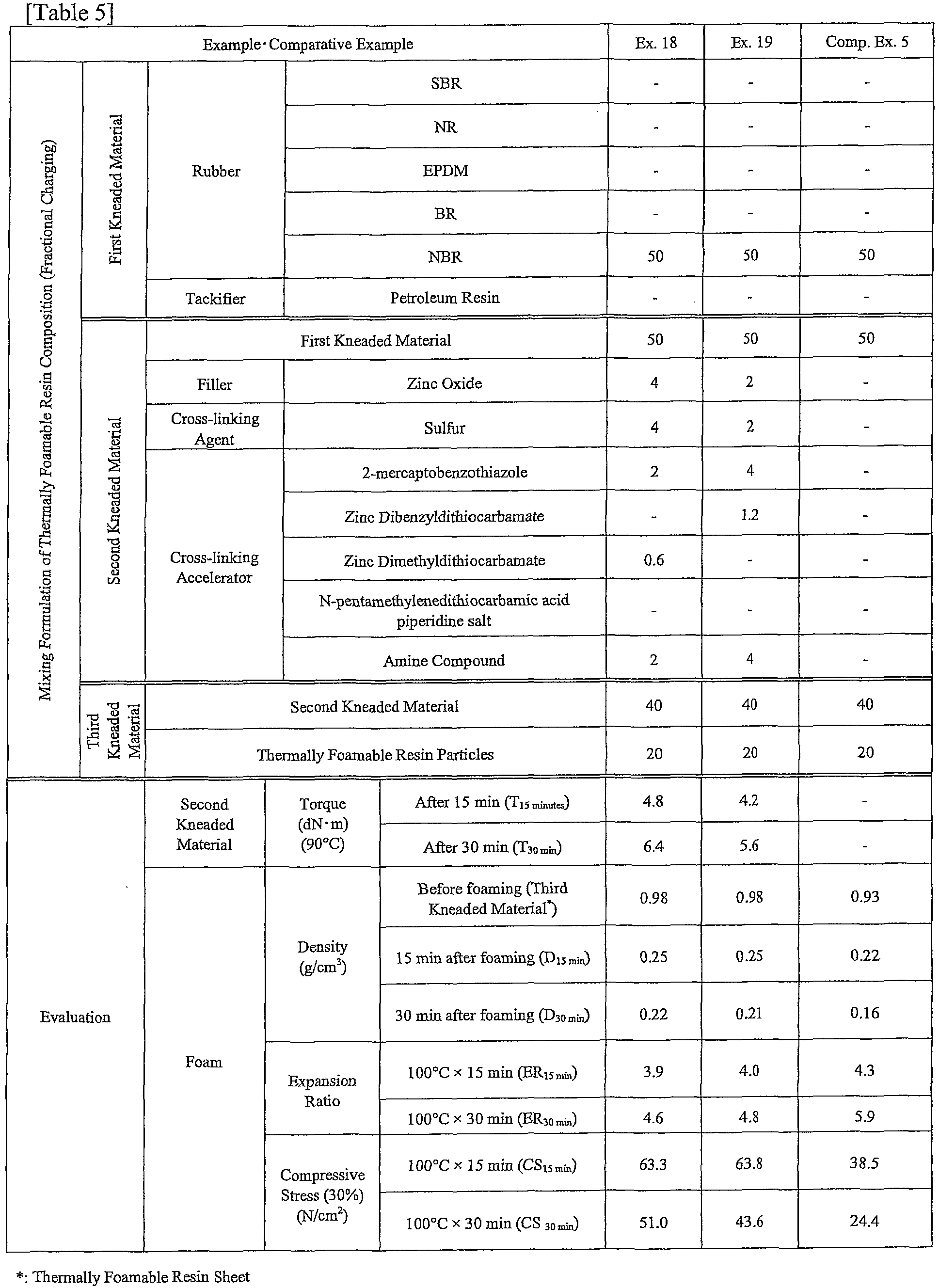

In Table 1 to Table 5, the values in the Mixing Formulation of Thermally Foamable Resin Composition section show parts by mass of the components blended.

In Table 1 to Table 5, abbreviations for the components are explained below. SBR: styrene-butadiene rubber: trade name "TUFDENE™ 2003", styrene content: 25 mass%, Mooney viscosity (ML (1 + 4) 100°C): 33, manufactured by Asahi Kasei Corporation NR: trade name "INT 3RSS Small Bale", natural rubber (masticated rubber), manufactured by Teck Bee Hang Co., Ltd
EPDM: ethylene • propylene • diene rubber, trade name "ESPLENE™ EPDM 505A", ethylene content 50 mass%, diene content: 9.5 mass%, Mooney viscosity (ML (1 + 4)100°C): 47, manufactured by Sumitomo Chemical Co., Ltd.
BR: butadiene rubber, trade name "JSR BR 0 1 ", Mooney viscosity (ML (1 + 4)100°C): 45, manufactured by JSR CORPORATION
NBR: acrylonitrile-butadiene rubber, trade name "Nipol DN 219", nitrile content: 33.5 mass%, Mooney viscosity (ML (1 + 4)100°C): 27, manufactured by ZEON CORPORATION Petroleum resin: trade name "Petrotack 90HM", C5 aliphatic/C9 aromatic copolymer petroleum resin, softening point 88°C, manufactured by Tosoh Corporation
Zinc Oxide: average particle size 0.24 to 0.30 µm, filler
Sulfur: Alphagran S-50EN, masterbatch of sulfur with EPDM used as a binder, sulfur content: 50 mass%
2-mercaptobenzothiazole: trade name "NOCCELER M", cross-linking accelerator (vulcanization accelerator), manufactured by OUCHI SHINKO CHEMICAL INDUSTRIAL CO., LTD.
Zinc Dibenzyldithiocarbamate: trade name "NOCCELER ZTC", cross-linking accelerator (vulcanization accelerator), manufactured by OUCHI SHINKO CHEMICAL INDUSTRIAL CO., LTD.
Zinc Dimethyldithiocarbamate: trade name "NOCCELER PZ", cross-linking accelerator (vulcanization accelerator), manufactured by OUCHI SHINKO CHEMICAL INDUSTRIAL CO., LTD.
N-pentamethylenedithiocarbamic acid piperidine salt: trade name "NOCCELER PPD", cross-linking accelerator (vulcanization accelerator), manufactured by OUCHI SHINKO CHEMICAL INDUSTRIAL CO., LTD.
Amine Compound: trade name "Nocmaster EGS", manufactured by OUCHI SHINKO CHEMICAL INDUSTRIAL CO., LTD.
Thermally foamable resin particles: trade name "Kanepearl™ K-BS ", foamable polystyrene beads (thermally foamable resin particles), thermally expandable substance: butane, boiling point -0.5°C, average particle size 0.6 mm, manufactured by Kaneka Corporation

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

A foam obtained by foaming a thermally foamable resin composition can be used as a filler, which fills in gaps between various members or the internal space of a hollow member, of industrial products in various industrial fields.

## Claims

1. A thermally foamable resin composition comprising a base resin, foamable resin particles, and a cross-linking agent,
wherein each of the foamable resin particles contains a solid resin and a thermally expandable substance contained in the solid resin.

2. The thermally foamable resin composition according to Claim 1, wherein the thermally foamable resin composition can be foamed and crosslinked by heating at 120°C or less.

3. The thermally foamable resin composition according to Claim 1, wherein the base resin contains at least one component selected from the group consisting of a rubber, a thermoplastic resin, and a thermosetting resin, and crosslinking of the base resin is to be caused by the cross-linking agent.

4. The thermally foamable resin composition according to Claim 1, further comprising a cross-linking accelerator.

5. The thermally foamable resin composition according to Claim 1, wherein a foam obtained by heating the thermally foamable resin composition at 100°C for 30 min to foam has a density of 0.1 to 1.0 g/cm³.

6. The thermally foamable resin composition according to Claim 1, wherein the thermally expandable substance has a boiling point in the range of -160 to 120°C.

7. The thermally foamable resin composition according to Claim 1, wherein the foamable resin particles are obtained by polymerizing a monomer of the resin in the presence of the thermally expandable substance.

8. The thermally foamable resin composition according to Claim 1, wherein the resin is a polystyrene and/or a polystyrene copolymer.

9. The thermally foamable resin composition according to Claim 1, wherein 0.1 to 350 parts by mass of the foamable resin particles relative to 100 parts by mass of the base resin is contained.

10. A thermally foamable resin sheet obtained by forming a thermally foamable resin composition into a sheet, the thermally foamable resin composition comprising a base resin, foamable resin particles, and a cross-linking agent,
wherein each of the foamable resin particles contains a solid resin and a thermally expandable substance contained in the solid resin.

11. A foam obtained by foaming a thermally foamable resin composition comprising a base resin, foamable resin particles, and a cross-linking agent by heating,
wherein each of the foamable resin particles contains a solid resin and a thermally expandable substance contained in the solid resin.

12. A foam obtained by foaming a thermally foamable resin sheet formed from a thermally foamable resin composition comprising a base resin, foamable resin particles, and a cross-linking agent to foam by heating,
wherein each of the foamable resin particles contains a solid resin and a thermally expandable substance contained in the solid resin.

13. A method for producing a foam by foaming a thermally foamable resin composition including a base resin, foamable resin particles, and a cross-linking agent by heating,
wherein each of the foamable resin particles contains a solid resin and a thermally expandable substance contained in the solid resin.

14. A method for producing a foam comprising
foaming a thermally foamable resin sheet by heating, the thermally foamable resin sheet being formed into a sheet from a thermally foamable resin composition comprising a base resin, foamable resin particles, and a cross-linking agent
wherein each of the foamable resin particles contains a solid resin and a thermally expandable substance contained in the solid resin.

15. A method for producing a foam according to Claim 13,
wherein the heating is conducted at a temperature in the range of 120°C or less.

16. A method for producing a foam according to Claim 14,
wherein the heating is conducted at a temperature in the range of 120°C or less.
